# EUROPÄISCHE PATENTSCHRIFT

(11) **EP 2 699 490 B1**
(45) Veröffentlichungstag und Bekanntmachung des Hinweises auf die Patenterteilung: **03.06.2015**
(21) Anmeldenummer: 12720061.6
(22) Anmeldetag: 23.04.2012
(51) Int. Cl.: B65D 81/38

(54) **VERPACKUNG MIT UMSCHLIEßENDER WÄRMEBARRIERE**
PACKAGING HAVING A SURROUNDING HEAT BARRIER
EMBALLAGE DOTE D'UNE BARRIERE THERMIQUE ENVELOPPANTE

(30) Priorität: 21.04.2011 AT 5722011
(43) Veröffentlichungstag der Anmeldung: 26.02.2014
(73) Patentinhaber: Ros, Nico, 4052 Basel (CH); Ettl, Richard, 8702 Zollikon (CH)
(72) Erfinder: Ros, Nico, 4052 Basel (CH); Ettl, Richard, 8702 Zollikon (CH)
(74) Vertreter: Keschmann, Marc
(86) Internationale Anmeldenummer: PCT/AT2012/000110
(87) Internationale Veröffentlichungsnummer: WO 2012/142639

(56) Entgegenhaltungen:
- WO-A1-2011/032299
- WO-A2-2004/016417
- US-A- 3 993 811
- US-A- 5 270 092
- US-A- 5 913 445
- US-A1- 2002 144 482

## Beschreibung

Die Erfindung betrifft ein Isolationselement zur Begrenzung von thermisch zu isolierenden Räumen, z.B. für Transport- oder Verpackungsbehälter, umfassend ein Trägerelement aus einem eine geringe Wärmeleitfähigkeit aufweisenden Material, wie z.B. ein Polymer: Die Erfindung betrifft weiters einen Behälter, insbesondere für Verpackungszwecke, dessen Wände jeweils aus wenigstens einem Isolationselement aufgebaut sind. Die Erfindung betrifft weiters ein Verfahren zur Herstellung eines Isolationselements.

US 3993811 offenbart ein Isolationselement mit optimiertem Dämmwert zur Begrenzung von thermisch zu isolierenden Räumen.

WO 2011/032299 beschreibt ein Wabenstrukturelement mit einer mindestens teilweise geschlossenen Wabenstruktur, welche durch das Zusammenfügen mindestens zweier strukturierter Schichten mit einseitig offenen Wabenzellen gebildet ist.

Es ist bereits bekannt, dass eine gute Wärmeisolierung mittels des sogenannten Dewar-Prinzips erhalten werden kann, das im Wesentlichen darin besteht, dass man zwischen wärmereflektierenden Wandungen einen hochevakuierten Raum einschließt. Dieses Prinzip kann hauptsächlich bei zylindrischen Isolierbehältern genutzt werden. Verpackungs-, Aufbewahrungs- oder Transportbehälter, bei denen das Dewar-Prinzip genutzt wird, vermindern die drei möglichen Wärmeübertragungsprozesse, nämlich Wärmeleitung, Wärmestrahlung und Konvektion. Die Wärmeleitung wird beispielsweise durch die Wahl eines Materials mit geringer Wärmeleitfähigkeit beeinflusst, aber auch die Form des Gefäßes spielt eine Rolle. Der Wärmetransport durch Strahlung wird durch eine Verspiegelung der Behälterwände verringert. Die Evakuierung verhindert den Wärmetransport durch Konvektion.

Die Wärmeleitfähigkeit, auch Wärmeleitzahl (λ) eines Festkörpers, einer Flüssigkeit oder eines Gases ist sein Vermögen, thermische Energie mittels Wärmeleitung in Form von Wärme zu transportieren. Die (spezifische) Wärmeleitfähigkeit in Watt je Kelvin und Meter ist eine temperaturabhängige Materialkonstante. Wenn im Rahmen der Erfindung von einer geringen Wärmeleitfähigkeit gesprochen wird, so ist, wenn nicht anders angegeben, ein Material mit einer Wärmeleitfähigkeit von < 100 mWm⁻¹K⁻¹ gemeint.

Bei paneelartigen Isolationselementen lässt sich das Dewar-prinzip weniger einfach realisieren als bei zylindrischen Isolationsbehältern, weil Isolationselemente mit ebenen Wandungen zu hohe Wandstärken erfordern, um dem äußeren Atmosphärendruck widerstehen zu können. Deshalb verzichtet man bei paneelartigen Isolationselementen meist auf die Erzeugung eines Vakuums in einem Hohlraum zwischen der Innen- und der Außenwandung des Elements. Bei Isolationsmaterialien für insbesondere paneelartige Isolationselemente sind die Wärmeleitfähigkeit, die Gasdichte und vor allem auch die Reflexion von Wärmestrahlen für die Isolationseigenschaften von großer Bedeutung. Isolationselemente aus Polymeren zeichnen sich im Allgemeinen durch eine geringe Wärmeleitfähigkeit aus. Anderseits sind ihre Gasdichte und ihr Reflexionsvermögen von Wärmestrahlen ungenügend. Metalle können hingegen vollständig gasdicht sein und Wärmestrahlen reflektieren, doch aufgrund ihrer relativ hohen Wärmeleitfähigkeit kamen sie bisher als Isolationsmaterialien zur Wärmedämmung nicht in Frage.

Die Erfindung zielt daher darauf ab, ein Isolationselement zu schaffen, umfassend ein insbesondere plattenförmiges Trägerelement aus einem eine geringe Wärmeleitfähigkeit aufweisenden Material, wie z.B. ein Polymer, bei dem die Reflexion der Wärmestrahlung und die Gasdichte deutlich erhöht werden können, ohne dass dadurch die Gesamtwärmeleitfähigkeit reduziert wird.

Gemäß einem ersten Aspekt der Erfindung ist zur Lösung dieser Aufgabe ausgehend von einem Isolationselement der eingangs genannten Art im Wesentlichen vorgesehen, dass das Trägerelement mit einer metallischen Beschichtung versehen ist, die einen Emissionsgrad von < 0,2, vorzugsweise 0,02 - 0,09, zur Reduktion der Wärmestrahlung und eine Schichtdicke von < 80 nm, vorzugsweise < 50 nm, zur Minimierung der Wärmeleitung der metallischen Beschichtung aufweist. Mit der vorliegenden Erfindung gelingt es, den Vorteil der geringen Wärmeleitfähigkeit z.B. von Polymeren des Trägermaterials mit gasdichten Metallschichten im Nanometerbereich so zu verbinden, dass das Isolationsmaterial Wärmestrahlen erheblich reflektiert und bevorzugt zugleich gasdicht verschlossen wird, die Metallschicht aber so beschaffen ist, dass ihre Wärmeleitung auf ein Minimum reduziert wird. Metallische Beschichtungen sind bei Isolationselementen wegen ihrer hohen Wärmeleitfähigkeit problematisch, sodass die Gefahr besteht, dass die Vorteile der geringen Wärmeleitfähigkeit des Trägerelements durch die hohe Wärmeleitfähigkeit der metallischen Beschichtung zumindest teilweise zunichte gemacht werden. Im Rahmen der vorliegenden Erfindung gelingt es, den Emissionsgrad der Wärmestrahlung (von vorzugsweise < 0.1) erheblich zu reduzieren, die Gasdichte zu optimieren und zugleich die Wärmeleitung durch die metallische Beschichtung auf Grund der überaus geringen Schichtdicke von < 80nm, insbesondere < 50 nm, zu minimieren. Weiters bewirkt die Morphologie insbesondere in der Übergangszone zwischen Polymerträger und Metallbeschichtung, dass der Wärmeübergang zwischen der Metallbeschichtung und dem Trägerelement erschwert wird.

Eine bevorzugte Weiterbildung sieht vor, dass die Beschichtung aus Silber besteht. Silber weist zwar eine außerordentlich hohe Wärmeleitfähigkeit (429 Wm⁻¹K⁻¹) auf, sodass eine möglichst geringe Schichtdicke von bevorzugt unter 50 nm besonders wichtig ist, zeichnet sich aber durch eine hohe Oxidationsbeständigkeit, eine hohe Gasdichte und antibakteriellen Eigenschaften aus. Auf Grund der antibakteriellen Eigenschaften ist das mit Silber beschichtete Isolationselement besonders für Isolationsbehälter im medizinischen Bereich geeignet, wobei die Silberbeschichtung jedenfalls an der dem Innenraum des Behälters zugewandten Seite des Isolationselements angeordnet ist. Zusätzlich kann eine Metall-, insbesondere Silberbeschichtung auch an der Außenseite des Behälters vorgesehen sein.

Besonders bevorzugt ist es, wenn die Beschichtung durch Sputterdeposition aufgetragen ist. Besonders bei Silber wird hierbei eine hohe Sputterausbeute beobachtet. Das Sputtern ist im Rahmen der Erfindung besonders vorteilhaft, da es eine hohe Schichtqualität bereits bei sehr dünnen Schichten ermöglicht und eine Grenzschichtbildung auf Polymeren erlaubt. Das Sputtern (Kathodenzerstäubung) ist ein physikalischer Vorgang, bei dem Atome aus einem Festkörper (Target) durch Beschuss mit energiereichen Ionen (vorwiegend Edelgasionen) herausgelöst werden und in die Gasphase übergehen. Bei der Sputterdeposition wird in die Nähe des Targets ein Substrat gebracht, so dass die herausgeschlagenen Atome auf diesem kondensieren und eine Schicht bilden können. Die Sputterdeposition ist somit eine zur Gruppe der PVD-Verfahren gehörende hochvakuumbasierte Beschichtungstechnik, die dem Fachmann bekannt ist und hier daher nicht näher erläutert zu werden braucht.

Das erfindungsgemäße Isolationselement ist mit Vorteil als Paneel ausgebildet, wobei mehrere Paneele zu einem Isolationsbehälter zusammengesetzt werden können, wenn, wie dies einer bevorzugten Weiterbildung entspricht, die Isolationselemente selbsttragend sind. Die Paneele können aber auch zur Innenauskleidung oder zur Außenverkleidung von bestehenden Behältern verwendet werden. Bevorzugt weisen die Paneele an ihren Rändern Verbindungselemente auf, sodass benachbarte Paneele in einfacher Weise miteinander verbunden werden können. Hierbei kann es sich beispielsweise um formschlüssige Verbindungselemente handeln, wie z.B. eine Profilierung zur Herstellung einer Nut-Feder Verbindung.

Um die Isolationseigenschaften weiter zu verbessern, kann bevorzugt vorgesehen sein, dass das Trägerelement in sich wenigstens einen geschlossenen Hohlraum aufweist. Erfindungsgemäß weist das Trägerelement in sich eine Vielzahl von insbesondere im Wesentlichen wabenförmigen, geschlossenen Hohlräumen auf. Insbesondere ist eine Vielzahl von kleinen Hohlräume durch Trennwände voneinander getrennt. Erfindungsgemäß sind die den wenigstens einen Hohlraum bzw. die Hohlräume begrenzenden Wände mit der metallischen Beschichtung versehen. Dabei ist insbesondere die gesamte Oberfläche der Hohlräume beschichtet.

Der wenigstens eine Hohlraum bzw. die Hohlräume können mit einem Gas, wie z.B. Luft gefüllt sein. Der wenigstens eine Hohlraum kann hierbei teilweise oder vollständig evakuiert sein. Dies reduziert die Wärmeleitfähigkeit weiter. Die Gasfüllung kann bevorzugt aber auch durch Stickstoff oder ein Edelgas, insbesondere Argon, Xenon oder Krypton gebildet sein. Bei den heutigen Dämmstoffen kommt der Gasleitung - verglichen mit der Festkörperleitung - die entscheidende Bedeutung zu, da jene von Luft (λ = 0,026 Wm⁻¹K⁻¹) nur noch um rund einen Drittel tiefer liegt als zum Beispiel jene von Styropor (λ = 0,040 Wm⁻¹K⁻¹). Darum können wesentliche Verbesserungen nur durch eine Reduktion der Gasleitung erfolgen. Bis jetzt kann diese vor allem entweder durch Edelgase, die eine wesentlich geringere Wärmeleitfähigkeit als Luft aufweisen, oder durch Vakuum erreicht werden.

Im Bauwesen kommen Dämmstoffe mit Edelgasen aber selten zur Anwendung, weil deren Herstellung mit enormen Kosten verbunden ist und sie deshalb nicht wirtschaftlich genug sind. Andererseits ist die Lebensdauer von Vakuumisolationen sehr gering, da deren Wirksamkeit durch eingeströmte Luft je nach Stützstruktur schon bei einem Druck zwischen 0,1 und 10 mbar erheblich vermindert ist.

Wenn nun, wie dies einer bevorzugten Weiterbildung der Erfindung entspricht, das Gas in den bzw. den Hohlräumen unter unteratmosphärischem Druck, insbesondere unter einem Druck von 100 - 700 mbar steht, können durch die Herabsetzung des Gasdrucks die Kosten der Edelgasfüllung auf einen Bruchteil reduziert werden, so dass ein Isolationsmaterial mit Edelgasfüllung im Bauwesen oder für andere Zwecke überhaupt bezahlbar wird. In einem Druckbereich, in dem jede Vakuumisolation ihre Wirksamkeit verliert, bleibt hingegen die Wirksamkeit der Edelgasisolation mit Unterdruck erhalten, so dass diese trotz einströmender Luft eine wesentlich längere Lebensdauer aufweist.

Die Wärmedämmung kann bevorzugt auch dadurch verbessert werden, dass der wenigstens eine Hohlraum mit einem Latentwärmespeicher gefüllt ist. Ein Latentwärmespeicher ist eine Einrichtung, die thermische Energie verborgen, verlustarm, mit vielen Wiederholzyklen und über lange Zeit speichern kann. Man nutzt dazu sogenannte phase change materials (PCM, "Phasenwechselmaterialien"), deren latente Schmelzwärme, Lösungswärme oder Absorptionswärme wesentlich größer ist als die Wärme, die sie aufgrund ihrer normalen spezifischen Wärmekapazität (ohne den Phasenumwandlungseffekt) speichern können. Latentwärmespeicher funktionieren durch die Ausnutzung der Enthalpie reversibler thermodynamischer Zustandsänderungen eines Speichermediums, wie z.B. des Phasenübergangs fest-flüssig. Die Ausnutzung des Phasenübergangs fest-flüssig ist dabei das am häufigsten genutzte Prinzip.

Eine besonders vorteilhafte Ausbildung ergibt sich, wenn das Trägerelement eine Vielzahl von insbesondere wabenförmigen Hohlkammern aufweist, wobei ein Wabenstrukturelement gemäß der WO 2011/032299 A1 besonders vorteilhaft ist.

Gemäß einer bevorzugten Weiterbildung der Erfindung kann das Trägerelement besonders leicht und kostengünstig hergestellt werden, wenn es wenigstens eine Polymerfolie umfasst, welche die metallische, vorzugsweise gasdichte Beschichtung trägt. Diesbezüglich wird beispielsweise auf das Wabenstrukturelement gemäß WO 2011/032299 A1 verwiesen. Um trotz der Verwendung von Polymerfolien ein Trägerelement mit einer ausreichenden Stabilität und Steifigkeit zu erzielen ist hierbei bevorzugt vorgesehen, dass die Polymerfolie zur Ausbildung des wenigstens einen Hohlraums strukturiert ist, wobei die Strukturierung bevorzugt durch Tiefziehen der Folie hergestellt ist. Bevorzugt ist die Beschichtung beidseitig auf die Polymerfolie aufgebracht.

Gemäß einem zweiten Aspekt der Erfindung ist ein Verfahren zur Herstellung eines Isolationselements vorgesehen, umfassend das Versehen eines Trägerelements aus einem eine geringe Wärmeleitfähigkeit aufweisenden Material, wie z.B. ein Polymer, mit einer metallischen, insbesondere aus Silber bestehenden, vorzugsweise gasdichten Beschichtung, die mit einer Schichtdicke von < 80 nm, insbesondere < 50 nm aufgetragen wird. Wie bereits erwähnt wird die Beschichtung bevorzugt durch Sputterdeposition aufgetragen.

Als Trägerelement wird erfindungsgemäß wenigstens eine Polymerfolie verwendet, welche beschichtet wird. In einem solchen Fall, und zwar insbesondere bei einer Ausbildung des Trägerelements als Wabenstrukturelement gemäß WO 2011/032299 A1, wird das Verfahren erfindungsgemäß so durchgeführt werden, dass die Polymerfolie in unstrukturiertem Zustand mit der Beschichtung versehen wird, dass die beschichtete Folie danach durch Tiefziehen strukturiert wird, und dass die Polymerfolie derart zu dem Trägerelement verarbeitet wird, dass die durch das Tiefziehen erzielte Strukturierung wenigstens einen Hohlraum im Inneren des Trägerelements zumindest teilweise begrenzt. Das Beschichten, insbesondere Besputtern erfolgt somit vor dem Tiefziehen und es wurde überraschend beobachtet, dass die Polymerfolie auch nach dem Tiefziehen ihre guten Reflexionseigenschaften behält.

Bei einer Struktur des Trägerelements, bei der mehrere Lagen einer beschichteten, bevorzugt strukturierten Polymerfolie zum Einsatz gelangen, wie dies z.B. bei einer Wabenstruktur gemäß WO 2011/032299 A1 der Fall ist, konnte der Isolationswert des Trägerelements, der ohne Beschichtung 45 mWm⁻¹K⁻¹ beträgt, mit der erfindungsgemäßen Silber-Beschichtung auf ca. 30 mWm⁻¹K⁻¹ reduziert werden.

Bevorzugt wird so vorgegangen, dass die Beschichtung in wenigstens zwei Beschichtungsetappen vorgenommen wird. Hierdurch wird eine Mehrfachbeschichtung erreicht.

Geeignete Kunststoffe für das Trägerelement bzw. die Polymerfolie sind unter anderem Polyolefine, wie etwa Polypropylen (PP) oder Polyethylen (PE), Polyamide, wie etwa Nylon-6 bzw. Nylon-6,6, Polyurethane (PU), Polystyrol (PS), Polyvinylchlorid (PVC) oder Polyester, wie etwa Polyethylenterephthalat (PET).

Grundsätzlich eignen sich die erfindungsgemäßen Isolationselemente sowohl zur Isolierung einer kalten Innenatmosphäre von einer warmen Umgebung als auch zur Isolierung einer warmen Innenatmosphäre von einer kalten Umgebung.

Die Erfindung wird anhand von in der Zeichnung schematisch dargstellten Ausführungsbeispielen näher erläutert. In dieser zeigen
- Fig.1: das erfindungsgemäße Isolationselement in einer ersten Ausführungsform;
- Fig.2: das erfindungsgemäße Isolationselement in einer zweiten Ausführungsform als Wabenstrukturelement umfassend eine Mehrzahl von Schichten;
- Fig.3: ein zusammengefügtes Wabenstrukturelement aus Fig.2;
- Fig.4a: eine Draufsicht auf eine sechseckige Wabenzelle des Wabenstrukturelements aus Fig.3;
- Fig.4b: eine Schnittansicht der Wabenzelle der Fig.4a entlang der Linie B;
- Fig.4c: eine Schnittansicht der Wabenzelle der Fig.4a entlang der Linie C;
- Fig.5a: eine Draufsicht auf eine Schicht eines Wabenstrukturelements mit sechseckigen Wabenzellen;
- Fig.5b: eine Schnittansicht der Schicht von Wabenzelle der

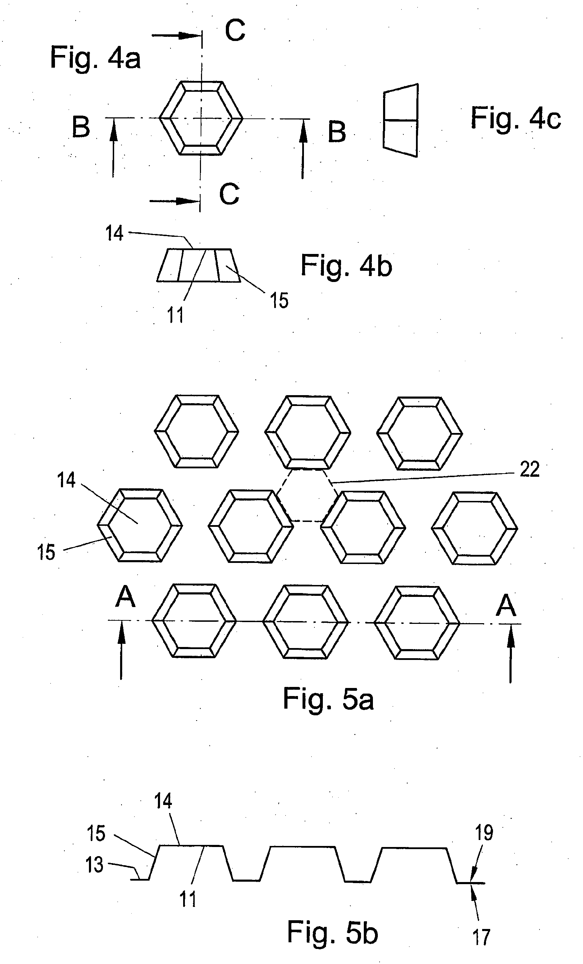

- Fig.5a: entlang der Linie A-A;

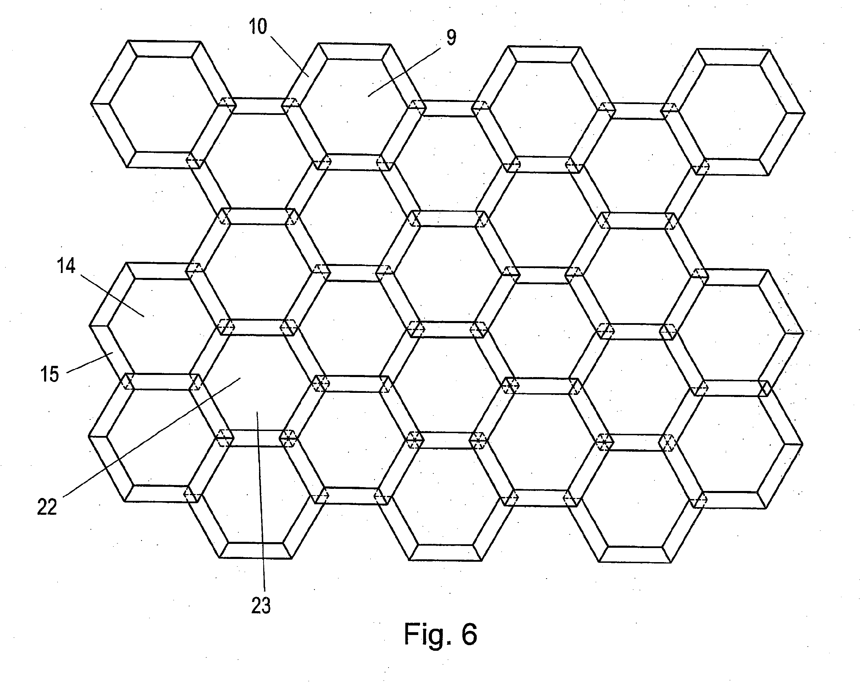

- Fig.6: eine Draufsicht auf ein Wabenstrukturelement umfassend zwei zusammengefügte Schichten zur Bildung von geschlossenen Wabenzellen;

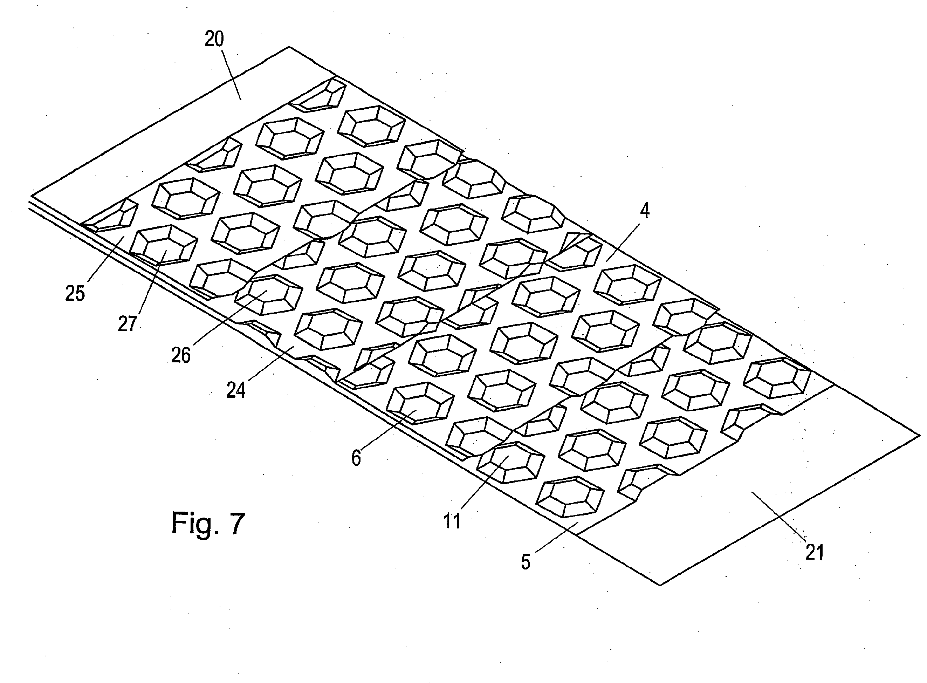

- Fig.7: ein weiteres Ausführungsbeispiel eines Isolationselements bestehend aus mehreren Wabenstrukturelementen;

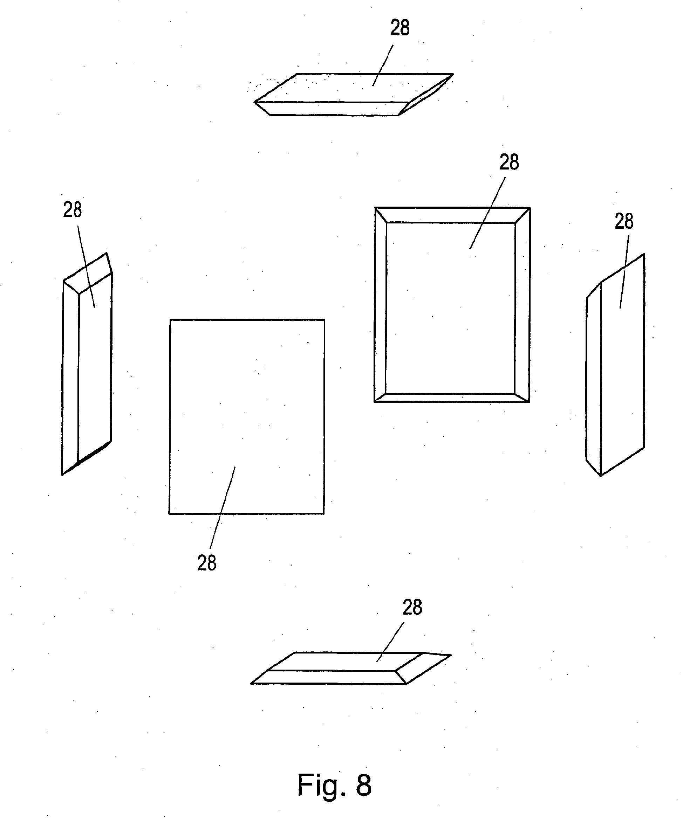

- Fig.8: und

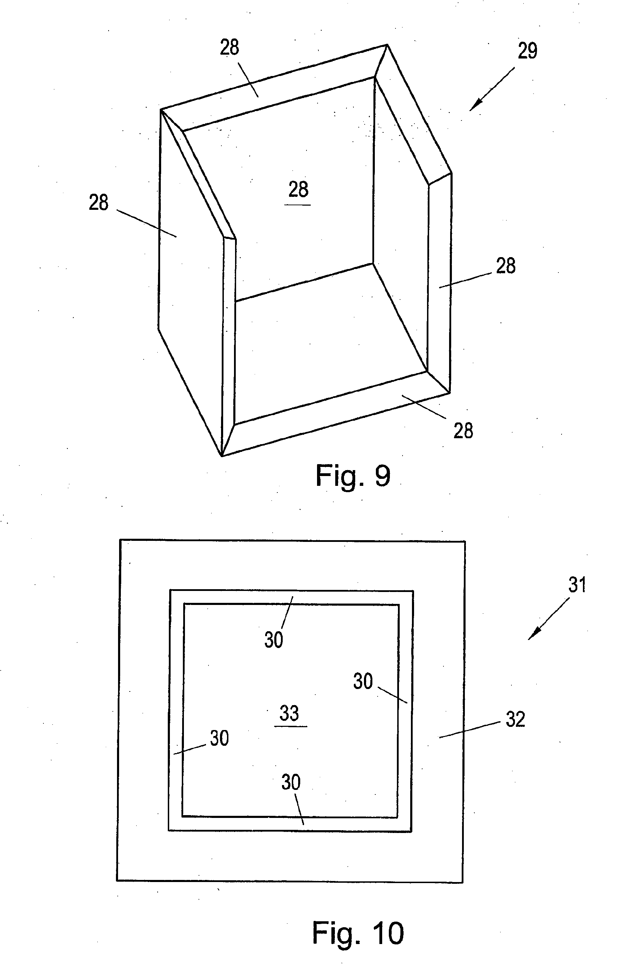

- Fig.9: zeigen Isolationselemente, die zu einem Isolationsbehälter zusammengefügt werden und
- Fig.10: zeigt ein Ausführungsbeispiel eines Isolationsbehälters, der die erfindungsgemäßen Isolationselemente umfasst.

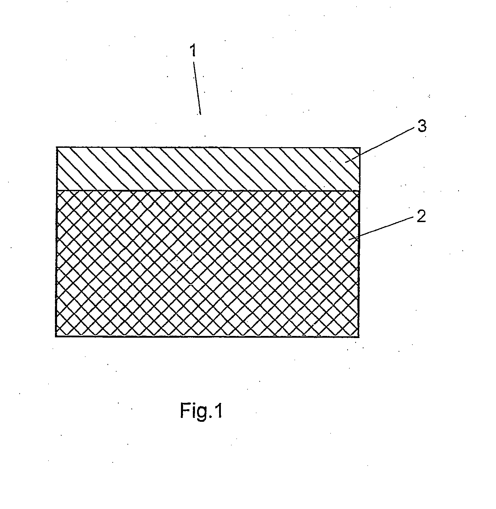

In Figur 1 ist ein Isolationselement mit 1 bezeichnet und weist ein Trägerelement 2 auf, das aus einem Polymer besteht, wie z.B. einem Polyolefin, wie etwa Polypropylen (PP) oder Polyethylen (PE), einem Polyamid, wie etwa Nylon-6 bzw. Nylon-6,6, Polyurethane (PU), Polystyrol (PS), Polyvinylchlorid (PVC) oder Polyester, wie etwa Polyethylenterephthalat (PET). Das Trägerelement kann eine Polymerfolie mit einer Dicke von 0,05 - 0,5 mm sein. Das Trägerelement kann aber auch als selbsttragendes Bauteil mit einer Dicke von > 3 mm ausgebildet sein. Weiters kann das Trägerelement geschlossene Kammern aufweisen. Das Trägerelement weist an wenigstens einer Seite eine Beschichtung 3 vorzugsweise aus Silber auf. Die Silberbeschichtung weist eine Dicke von < 80nm, insbesondere < 50nm, bevorzugt < 30nm auf.

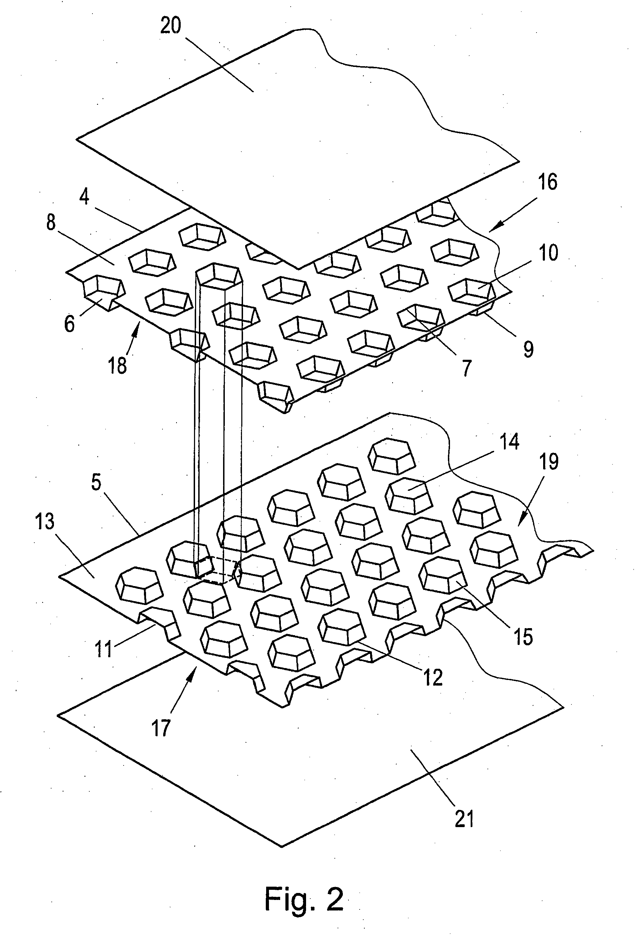

Figur 2 zeigt ein zweites Ausführungsbeispiel, bei dem das Isolationselement als Wabenstrukturelement ausgebildet ist, in dessen Einzelteilen umfassend zwei Schichten 4 und 5. Die erste Schicht 4 ist eine Schicht mit Vertiefungen in Form einseitig offener Wabenzellen 6 deren Randform 7 in der Schichtebene 8 ebenso sechseckig ist wie am Ende der Vertiefung 6, d.h. an deren Grundfläche 9. Die Wandflächen 10 der Vertiefungen 6 sind im Wesentlichen viereckig, vorzugsweise trapezförmig, und bezogen auf die Schichtebene 8 im Wesentlichen senkrecht, vorzugsweise leicht geneigt. Die zweite Schicht 5 ist eine Schicht mit Vertiefungen in Form einseitig offener Wabenzellen 11 deren Randform 12 in der Schichtebene 13 ebenso sechseckig ist wie am Ende der Vertiefung 11, d.h. an deren Grundfläche 14. Die Wandflächen 15 der Vertiefungen 11 sind im Wesentlichen viereckig, vorzugsweise trapezförmig, und bezogen auf die Schichtebene 13 im Wesentlichen senkrecht, vorzugsweise leicht geneigt. Die beiden Seiten umfassen ferner vorderseitig ebene Flächen 16 und 17, sowie rückseitig ebene Flächen 18 und 19. Als Rückseite wird die Seite bezeichnet, in welche z.B. das Tiefziehen einer Vertiefung erfolgt, wohingegen die Vorderseite jene Seite ist die z.B. beim Tiefziehen unverändert flach bleibt.

Figur 2 zeigt darüber hinaus, ebenfalls in dessen Einzelteilen, ein zweites Ausführungsbeispiel umfassend vier Schichten. Zu den beiden bereits beschriebenen Schichten umfasst dieses Ausführungsbeispiel ferner zwei flache Schichten 20 und 21. Die erfindungsgemäße Metallbeschichtung kann hierbei auf der Außenseite einer oder der beiden Schichten 20 und 21 oder auch auf beiden Schichten 20 und 21 aufgebracht sein. Zusätzlich oder alternativ können auch die Schichten 4 und 5 mit der reflektierenden Metallbeschichtung versehen sein.

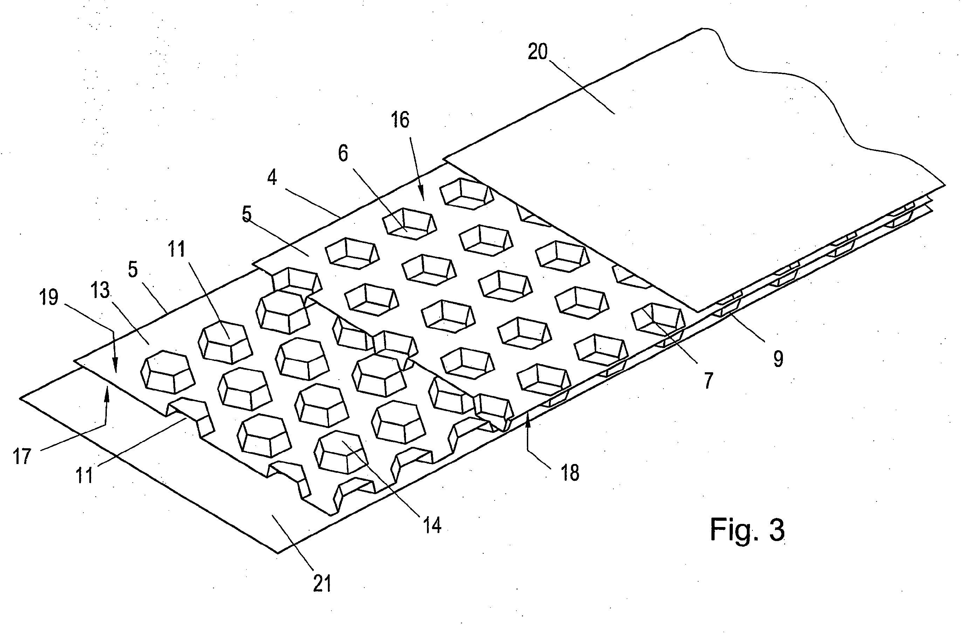

Figur 3 zeigt ein zusammengefügtes Wabenstrukturelement des zweiten Ausführungsbeispiels aus Figur 2, wobei die Vertiefungen 6 und 11 der beiden strukturierten Schichten 4 und 5 so ineinander greifen, dass geschlossene Wabenzellen gebildet werden, welche in der Figur auf Grund der gewählten Darstellungsform nicht sichtbar und deshalb nicht mit einem Bezugszeichen versehen sind, aber aus nachfolgenden Figuren erkennbar sind. Die Grundflächen 9 und 14 der einseitig offenen Wabenzellen 6 und 11 kontaktieren dabei die rückseitig ebenen Flächen 18 und 19 der jeweils gegenüberliegenden strukturierten Schicht. Die beiden flachen Schichten 20 und 21 dagegen kontaktieren die vorderseitig ebenen Flächen 16 und 17 der entsprechenden strukturierten Schicht und verschließen die einseitig offenen Wabenzellen 6 und 11. Mit Ausnahme von Wabenzellen an den Rändern des Wabenstrukturelements sind in diesem Ausführungsbeispiel damit alle Wabenzellen geschlossen.

Figur 4 zeigt ein Detail des Ausführungsbeispiels der Figur 3. In einer Draufsicht ist in Figur 4a eine einzelne sechseckige Wabenzelle gezeigt, sowie zwei Schnittansichten in Figur 4b entlang der Linie B, sowie in Figur 4c entlang der Linie C der Figur 4a. Die einseitig offene Wabenzelle umfasst an deren Ende 11 eine sechseckige Grundfläche 14, sowie im Wesentlichen senkrecht, vorzugsweise leicht geneigt, dazu Wandflächen 15, die im Wesentlichen viereckig, vorzugsweise trapezförmig, sind.

Figur 5 zeigt einen Teil des Ausführungsbeispiels der Figur 3. In einer Draufsicht ist in Figur 5a eine strukturierte Schicht eines Wabenstrukturelements mit sechseckigen Wabenzelle gezeigt, sowie in Figur 5b eine Schnittansicht entlang der Linie A-A der Figur 5a. Die einseitig offenen Wabenzellen der strukturierten Schicht umfassen an deren Ende 11 eine sechseckige Grundfläche 14, sowie im Wesentlichen senkrecht, vorzugsweise leicht geneigt, dazu Wandflächen 15. Die strukturierte Schicht umfasst ferner eine vorderseitig ebene Fläche 17, sowie eine rückseitig ebene Fläche 19. Als Rückseite wird die Seite bezeichnet, in die z.B. das Tiefziehen einer Vertiefung erfolgt, wohingegen die Vorderseite die Seite ist die z.B. beim Tiefziehen unverändert flach bleibt. In Figur 5a ist ferner gestrichelt angedeutet wo eine geschlossene Wabenzelle 22 mit sechseckiger Grundfläche als Sekundärstruktur entsteht, wenn zwei komplementäre strukturierte Schichten zusammengefügt werden.

Figur 6 zeigt eine schematische Draufsicht auf das Wabenstrukturelement der Figur 3 umfassend zwei zusammengefügte Schichten (4 und 5 analog der Darstellung in vorangehenden Figuren), welche Wabenzellen 6 mit Grundflächen 9 und Wandflächen 10 beitragen, sowie Wabenzellen 11 mit Grundflächen 14 und Wandflächen 15, zur Bildung von geschlossenen Wabenzellen 22 mit Grundfläche 23, deren Wandflächen je zur Hälfte Wandflächen 10 der Wabenzellen 6 und Wandflächen 15 der Wabenflächen 11 bilden. Davon ausgehend, dass sowohl Wabenzellen 6, als auch Wabenzellen 11 einseitig offene Wabenzellen sind, wird ein Wabenstrukturelement erhalten, in dem mit Ausnahme von Randbereichen des Wabenstrukturelements ein Drittel der Wabenzellen 22 geschlossen sind. Durch entsprechende Deckschichten kann daraus in einem weitergebildeten Ausführungsbeispiel ein Wabenstrukturelement erhalten werden in dem mit Ausnahme von Randbereichen alle Wabenzellen (6, 11 und 22) geschlossen sind.

Figur 7 zeigt ein abgewandeltes Ausführungsbeispiel eines Wabenstrukturelements, bei dem zwischen den beiden flachen Schichten 20 und 21 zusätzlich zu den in Figur 2 vorgesehenen strukturierten Schichten 4 und 5 zwei weitere strukturierte Schichten 24 und 25 angeordnet sind, die so wie die beiden strukturierten Schichten 4 und 5 Vertiefungen in Form von einseitig offenen Wabenzellen 26 und 27 aufweisen. Die Wabenzellen 26 und 27 sind relativ zueinander so angeordnet, wie die Wabenzellen 6 und 11 der Schichten 4 und 5.

Figur 8 und 9 zeigen Isolationselemente 28, die zu einem Isolationsbehälter 29 zusammengefügt werden. Dabei kann es sich um Isolationselemente gemäß irgendeinem der zuvor beschriebenen Ausführungsbeispiele handeln, z.B. ein Isolationselement gemäß Figur 1, gemäß Figur 2-6 oder gemäß Figur 7. In der auseinandergezogenen Darstellung gemäß Figur 8 ist ersichtlich, dass jede Behälterwand des quaderförmigen Behälters von einem Isolationselement 28 gebildet ist. Der erfindungsgemäße Isolationsbehälter kann aber jede beliebige Form aufweisen und zum Beispiel auch kugelförmig, pyramidenförmig usw. sein.

Figur 10 zeigt den Querschnitt eines Isolationsbehälters 31, dessen innere Elemente 30, die den Kühlraum 33 vollständig umschließen, mit Latentwärmespeicher gefüllt sind. Diese mit Latentwärmespeicher gefüllten Elemente 30 können eigenständige Module oder Teil eines Isolationselements oder Isolationsbehälters sein. Beispielsweise kann es sich bei den Elementen 30 um Isolationselemente gemäß den Figuren 2-7 handeln, deren Wabenzellen mit Latentwärmespeicher gefüllt sind. Der Isolationsbehälter 31 umfasst einen Mantel 32, der beispielsweise aus Wandelementen aufgebaut ist, an deren Innenseite jeweils ein Isolationselement 30 angebracht ist.

Bei all den zuvor beschriebenen Ausführungsbeispielen können die Wabenzellen eine Gasfüllung aufweisen. Als Gas kommt z.B. ein Gas mit einer Wärmeleitfähigkeit von < 22mWm⁻¹K⁻¹ in Frage, wie insbesondere Edelgase, z.B. Xenon, Krypton oder Argon. In den Wabenzellen herrscht hierbei vorzugsweise ein unteratmosphärischer Druck. Der Gasdruck in den Zellen beträgt vorzugsweise 100 - 700 mbar.

## Patentansprüche

1. Isolationselement mit optimiertem Dämmwert zur Begrenzung von thermisch zu isolierenden Räumen, z.B. für Transport- oder Verpackungsbehälter, umfassend ein insbesondere plattenförmiges Trägerelement aus einem eine geringe Wärmeleitfähigkeit aufweisenden Material, wie z.B. ein Polymer, das mit einer metallischen Beschichtung (3) versehen ist, die einen Emissionsgrad von < 0,2, vorzugsweise 0,02 - 0,09, und eine Schichtdicke von < 80 nm, vorzugsweise < 50 nm, aufweist, **dadurch gekennzeichnet, dass** das Trägerelement (2) in sich eine Vielzahl von insbesondere im Wesentlichen wabenförmigen, geschlossenen Hohlräumen (22) aufweist und die die Hohlräume (22) begrenzenden Wände mit der metallischen Beschichtung versehen sind.

2. Isolationselement nach Anspruch 1, **dadurch gekennzeichnet, dass** die Beschichtung (3) aus Silber besteht.

3. Isolationselement nach Anspruch 1 oder 2, **dadurch gekennzeichnet, dass** die Beschichtung (3) durch Sputterdeposition aufgetragen ist.

4. Isolationselement nach Anspruch 1, 2 oder 3, **dadurch gekennzeichnet, dass** die Beschichtung (3) gasdicht ist.

5. Isolationselement nach einem der Ansprüche 1 bis 4, **dadurch gekennzeichnet, dass** das Isolationselement (1) als Paneel ausgebildet ist.

6. Isolationselement nach einem der Ansprüche 1 bis 5, **dadurch gekennzeichnet, dass** der wenigstens eine Hohlraum (22) vollständig oder teilweise evakuiert ist.

7. Isolationselement nach einem der Ansprüche 1 bis 6, **dadurch gekennzeichnet, dass** der wenigstens eine Hohlraum mit einem Gas mit geringer Wärmeleitfähigkeit (< 22mWm⁻¹K⁻¹, insbesondere < 20mWm⁻¹K⁻¹) gefüllt ist.

8. Isolationselement nach Anspruch 7, **dadurch gekennzeichnet, dass** das Gas unter unteratmosphärischem Druck, insbesondere unter einem Druck von 100 - 700 mbar steht.

9. Isolationselement nach Anspruch 7 oder 8, **dadurch gekennzeichnet, dass** das Gas Xenon, Krypton oder Argon ist.

10. Isolationselement nach einem der Ansprüche 1 bis 5, **dadurch gekennzeichnet, dass** der wenigstens eine Hohlraum (22) mit einem Latentwärmespeicher gefüllt ist.

11. Isolationselement nach einem der Ansprüche 1 bis 10, **dadurch gekennzeichnet, dass** das Trägerelement (2) wenigstens eine Polymerfolie umfasst, welche die metallische, vorzugsweise gasdichte Beschichtung (3) trägt.

12. Isolationselement nach Anspruch 11, **dadurch gekennzeichnet, dass** die Polymerfolie zur Ausbildung des wenigstens einen Hohlraums strukturiert ist, wobei die Strukturierung bevorzugt durch Tiefziehen der Folie hergestellt ist.

13. Isolationselement nach einem der Ansprüche 1 bis 12, **dadurch gekennzeichnet, dass** es selbsttragend ist.

14. Behälter, insbesondere für Verpackungszwecke, dessen Wände jeweils aus wenigstens einem Isolationselement (1) nach einem der Ansprüche 1 bis 13 aufgebaut sind.

15. Verfahren zur Herstellung eines Isolationselements nach einem der Ansprüche 1 bis 13, umfassend das Versehen wenigstens einer Polymerfolie mit einer metallischen, insbesondere aus Silber bestehenden, vorzugsweise gasdichten Beschichtung, die mit einer Schichtdicke von < 80 nm, insbesondere < 50 nm aufgetragen wird, wobei die Polymerfolie in unstrukturiertem Zustand mit der Beschichtung versehen wird, die beschichtete Folie danach durch Tiefziehen strukturiert wird und die Polymerfolie derart zu dem Trägerelement verarbeitet wird, dass die durch das Tiefziehen erzielte Strukturierung eine Mehrzahl von Hohlräumen im Inneren des Trägerelements erzeugt.

16. Verfahren nach Anspruch 15, **dadurch gekennzeichnet, dass** die Beschichtung durch Sputterdeposition aufgetragen wird.

17. Verfahren nach Anspruch 15 oder 16, **dadurch gekennzeichnet, dass** die Beschichtung in wenigstens zwei Beschichtungsetappen vorgenommen wird.

## Claims

1. An insulating element with an optimized insulating capability for confining spaces to be thermally insulated, e.g. for transport or packaging containers, comprising an in particular plate-shaped substrate element made of a material having a low thermal conductivity, such as a polymer provided with a metallic coating (3) having an emissivity of <0.2, preferably 0.02-0.09, and a layer thickness of <80 nm, preferably <50 nm, **characterized in that** the substrate element (2) comprises a plurality of in particular substantially honeycombed, closed cavities (22) and the walls defining the cavities (22) are provided with the metallic coating.

2. An insulating element according to claim 1, **characterized in that** the coating (3) is made of silver.

3. An insulating element according to claim 1 or 2, **characterized in that** the coating (3) is applied by sputter deposition.

4. An insulating element according to claim 1, 2 or 3, **characterized in that** the coating (3) is gas-tight.

5. An insulating element according to any one of claims 1 to 4, **characterized in that** the insulating element (1) is configured as a panel.

6. An insulating element according to any one of claims 1 to 5, **characterized in that** the at least one cavity (22) is completely or partially evacuated.

7. An insulating element according to any one of claims 1 to 6, **characterized in that** the at least one cavity is filled with a gas having a low thermal conductivity (<22 mWm⁻¹K⁻¹, in particular <20 mWm⁻¹K⁻¹).

8. An insulating element according to claim 7, **characterized in that** the gas is under subatmospheric pressure, in particular under a pressure of 100 - 700 mbar.

9. An insulating element according to claim 7 or 8, **characterized in that** the gas is xenon, krypton or argon.

10. An insulating element according to any one of claims 1 to 5, **characterized in that** the at least one cavity (22) is filled with a PCM (phase change material which stores heat) device.

11. An insulating element according to any one of claims 1 to 10, **characterized in that** the substrate element (2) comprises at least one polymer film that carries the metallic, preferably gas-tight, coating (3).

12. An insulating element according to claim 11, **characterized in that** the polymer film is patterned to form the at least one cavity, the patterning being preferably made by deep-drawing of the film.

13. An insulating element according to any one of claims 1 to 12, **characterized in that** it is self-supporting.

14. A container, in particular for packaging purposes, whose walls are each formed by at least one insulating element (1) according to any one of claims 1 to 13.

15. A method for manufacturing an insulating element according to any one of claims 1 to 13, which method comprises providing at least one polymer film with a metallic, preferably gas-tight, coating made, in particular, of silver, which coating is applied at a layer thickness of <80 nm, in particular <50 nm, wherein the polymer film is provided with the coating in the non-patterned state, the coated film is then patterned by deep-drawing, and the polymer film is processed into the substrate element in such a manner that the patterning obtained by deep-drawing produces a plurality of cavities in the interior of the substrate element.

16. A method according to claim 15, **characterized in that** the coating is applied by sputter deposition.

17. A method according to claim 15 or 16, **characterized in that** the coating is applied in at least two coating stages.

## Revendications

1. Elément d'isolation ayant un pouvoir isolant optimisé pour délimiter des espaces à isoler thermiquement, par exemple pour des conteneurs de transport ou d'emballage, comportant un élément de support en particulier en forme de plaque, constitué d'un matériau ayant une faible conductivité thermique, tel que par exemple un polymère, lequel élément de support est muni d'un revêtement métallique (3) ayant une émissivité < 0,2, de préférence de 0,02 à 0,09, et une épaisseur de couche < 80 nm, de préférence < 50 nm, **caractérisé en ce que** l'élément de support (2) comporte une pluralité de cavités fermées (22), en particulier sensiblement en forme d'alvéoles et les parois délimitant les cavités (22) sont munies du revêtement métallique.

2. Elément d'isolation selon la revendication 1, **caractérisé en ce que** le revêtement (3) est en argent.

3. Elément d'isolation selon la revendication 1 ou 2, **caractérisé en ce que** le revêtement (3) est appliqué par un dépôt par pulvérisation.

4. Elément d'isolation selon la revendication 1, 2 ou 3, **caractérisé en ce que** le revêtement (3) est étanche aux gaz.

5. Elément d'isolation selon l'une des revendications 1 à 4, **caractérisé en ce que** l'élément d'isolation (1) est configuré comme un panneau.

6. Elément d'isolation selon l'une des revendications 1 à 5, **caractérisé en ce qu'**un vide complet ou partiel est réalisé dans la au moins une cavité (22).

7. Elément d'isolation selon l'une des revendications 1 à 6, **caractérisé en ce que** la au moins une cavité est remplie d'un gaz ayant une faible conductivité thermique (< 22 mWm⁻¹K⁻¹, en particulier < 20 mWm⁻¹K⁻¹).

8. Elément d'isolation selon la revendication 7, **caractérisé en ce que** le gaz est sous pression subatmosphérique, en particulier sous une pression de 100 à 700 mbar.

9. Elément d'isolation selon la revendication 7 ou 8, **caractérisé en ce que** le gaz est du xénon, du krypton ou de l'argon.

10. Elément d'isolation selon l'une des revendications 1 à 5, **caractérisé en ce que** la au moins une cavité (22) est remplie d'un régulateur thermique à changement d'état.

11. Elément d'isolation selon l'une des revendications 1 à 10, **caractérisé en ce que** l'élément de support (2) comporte au moins un film polymère qui porte le revêtement métallique (3), de préférence étanche aux gaz.

12. Elément d'isolation selon la revendication 11, **caractérisé en ce que** le film polymère est structuré pour former la au moins une cavité, dans lequel la structuration est de préférence réalisée par emboutissage profond du film.

13. Elément d'isolation selon l'une des revendications 1 à 12, **caractérisé en ce qu'**il est autoporteur.

14. Conteneur, en particulier à des fins d'emballage, dont les parois sont respectivement fabriquées à partir d'au moins un élément d'isolation (1) selon l'une des revendications 1 à 13.

15. Procédé pour fabriquer un élément d'isolation selon l'une des revendications 1 à 13, comportant les étapes consistant à munir au moins un film polymère d'un revêtement métallique, de préférence étanche aux gaz, en particulier constitué d'argent, qui est appliqué avec une épaisseur de couche < 80 nm, en particulier < 50 nm, dans lequel le film polymère est muni du revêtement à l'état non structuré, le film déposé est ensuite structuré par emboutissage profond et le film polymère est transformé en élément de support de telle sorte que la structuration obtenue par emboutissage profond produit une pluralité de cavités à l'intérieur de l'élément de support.

16. Procédé selon la revendication 15, **caractérisé en ce que** le revêtement est appliqué par un dépôt par pulvérisation.

17. Procédé selon la revendication 15 ou 16, **caractérisé en ce que** le revêtement est réalisé en au moins deux étapes de revêtement.
